**Europäisches Patentamt**

(19) **European Patent Office**

**Office européen des brevets**

(11) Numéro de publication: **0 206 930**
**B1**

(12) ## FASCICULE DE BREVET EUROPEEN

(45) Date de publication du fascicule du brevet:
**18.10.89**

(51) Int. Cl.⁴: **B62D 55/075,** B62D 55/116,
G05D 1/08

(21) Numéro de dépôt: **86401322.2**

(22) Date de dépôt: **17.06.86**

(54) Véhicule à chenilles à géométrie variable.

(30) Priorité: **21.06.85 FR 8509485**

(43) Date de publication de la demande:
**30.12.86 Bulletin 86/52**

(45) Mention de la délivrance du brevet:
**18.10.89 Bulletin 89/42**

(84) Etats contractants désignés:
**BE CH DE FR GB IT LI**

(56) Documents cités:
**EP-A- 0 128 763**
**FR-A- 2 302 901**
**US-A- 3 127 188**

**INTERNATIONAL JOURNAL OF ROBOTICS**
**RESEARCH,**
vol. 2, no. 2, 1983, pages 3-17, Massachusetts Institute of Technology, Cambridge, Massachusetts, US; C.A. KLEIN et al.: "Use of force and attitude sensors for locomotion of a legged vehicle over irregular terrain" Phosphorus Sulfur 1983, 14(2), 151-6 000

(73) Titulaire: **COMMISSARIAT A L'ENERGIE ATOMIQUE,**
**29-31, rue de la Fédération, F-75015 Paris(FR)**

(72) Inventeur: **Clement, Gilles, 118, rue d'Avron,**
**F-75020 Paris(FR)**
Inventeur: **Villedieu, Eric, 148, rue de Paris,**
**F-91120 Palaiseau(FR)**

(74) Mandataire: **Mongrédien, André et al, c/o**
**BREVATOME 25, rue de Ponthieu, F-75008 Paris(FR)**

## Description

La présente invention concerne un véhicule à chenilles à géométrie variable conçu de façon à pouvoir se déplacer, éventuellement en transportant une charge, sur un chemin défini comme étant le chemin naturel de l'homme à l'intérieur d'une installation. De façon plus précise, le véhicule à chenilles selon l'invention est conçu en particulier de façon à pouvoir franchir des portes, monter ou descendre des escaliers à plusieurs volées de marches, prendre des ascenseurs et franchir ou contourner des obstacles mineurs.

Ce véhicule doit en outre pouvoir transporter des modules opérationnels propres à chaque mission à remplir, ces missions pouvant être très variées et comprenant notamment l'inspection, le démantèlement ou la décontamination d'une installation nucléaire et la lutte contre l'incendie.

Les véhicules à chenilles existants vont maintenant être décrits et discutés. Pour cela, on classera ces véhicules en fonction du nombre de chenilles, de corps chenillés et de corps non chenillés intérieurs ou extérieurs qu'ils comprennent, un corps chenillé étant défini comme un solide indéformable qui participe directement au supportage d'une ou plusieurs chenilles, alors qu'un corps non chenillé peut être défini comme un solide indéformable ne supportant pas de chenille. Un corps non chenillé est dit extérieur s'il constitue un appendice, et il est dit intérieur s'il constitue un élément intermédiaire de raccordement entre plusieurs corps chenillés.

En partant de ces définitions, les véhicules connus les plus simples sont les véhicules à deux chenilles solidaires d'un seul corps chenillé. Les chars d'assaut conventionnels militaires ainsi que certains chars d'intervention civils, militaires ou nucléaires appartiennent à cette catégorie. Dans leur conception de base, ces véhicules sont particulièrement instables puisqu'ils ne comprennent aucun moyen de contrôle actif de la posture, c'est-à-dire de la forme du véhicule, de la position de son centre de gravité par rapport aux points d'appui et de l'orientation de l'inertie par rapport à ces points d'appui.

Comme l'illustre notamment le brevet français n° 2 450 191, la stabilité des véhicules de ce type peut être améliorée en articulant sur le corps chenillé un corps non chenillé supportant la charge utile. Dans ce cas, il est possible, en déplaçant le centre de gravité du véhicule par pivotement de la charge utile, d'améliorer sa stabilité lorsqu'il se déplace sur une pente.

Certains des véhicules appartenant à cette première catégorie sont capables d'aborder des escaliers. Cependant, leurs performances sont limitées par le fait que, par nature, ils ne comprennent pas de contrôle de posture intrinsèque, c'est-à-dire que la posture ne peut pas être contrôlée si le véhicule ne comporte pas de corps non chenillé extérieur. Il en résulte un risque de retournement lors du franchissement d'un obstacle franc tel que le nez d'une marche, par manque de contrôle de la position du centre de gravité. En outre, le véhicule peut retomber brutalement après le franchissement d'un point singulier, notamment lors de l'arrivée sur le palier d'un escalier. De plus, si l'on accroît la longueur du véhicule afin que celui-ci puisse rester stable sur les nez de marches, cet accroissement de l'encombrement du véhicule est nuisible lors de l'arrivée sur les paliers, qui nécessite l'exécution d'un demi tour ou d'un quart de tour pratiquement sur place dans un espace qui peut être extrêmement réduit.

Un deuxième type connu de véhicule à chenilles est illustré par le brevet français n° 2 523 914. Il s'agit d'un véhicule comprenant deux chenilles à configuration variable et cinq corps chenillés constitués par un corps central et par deux systèmes de bielles articulées à deux segments. Ce véhicule constitue en fait une variante du premier type de véhicule indiqué précédemment, dans lequel un contrôle intrinsèque de la posture est en outre possible dans le plan frontal. En plus de sa réalisation complexe, ce véhicule présente pour inconvénient qu'il est toujours difficile d'obtenir une surlongueur au sol importante nécessaire notamment à la stabilité du véhicule sur un escalier. De plus, le guidage latéral des chenilles est difficile à réaliser et un déjantement de celles-ci est possible. Enfin, la déformation des chenilles empêche tout guidage intermédiaire entre les poulies, de sorte qu'un affaissement des chenilles sur un obstacle est possible lorsque leur rigidité est trop faible.

Un troisième type de véhicule à chenilles existant est un véhicule à quatre chenilles montées chacune de façon indépendante sur un corps chenillé, les quatre corps chenillés étant articulés sur un corps central non chenillé interne. Un tel véhicule est illustré notamment par la demande de brevet japonais n° 83-804 872/44. L'articulation indépendante de chacun des corps chenillés sur le corps central non chenillé confère à ce véhicule des possibilités de contrôle intrinsèque de la posture particulièrement riches.

Ce dispositif très ingénieux a toutefois pour inconvénient que le corps central non chenillé peut frotter ou même se bloquer sur un obstacle poin tu, lors du franchissement de cet obstacle. De plus, les fonctions de variation de la configuration (permettant de s'adapter au terrain) et de contrôle intrinsèque de la posture (permettant de contrôler la position du centre de gravité) sont couplées. En conséquence, lorsque le véhicule se déplace sur une pente, il n'est pas possible d'assurer à la fois une configuration des corps chenillés optimale et une modification de l'attitude de la charge permettant par exemple un maintien horizontal de celle-ci.

On connaît aussi un autre véhicule à quatre chenilles montées deux à deux sur deux corps chenillés articulés autour d'un axe commun. Le véhicule "Spider" de la Sté britannique Aere Harwell appartient à cette catégorie. Par rapport au véhicule précédent comprenant un corps non chenillé intermédiaire, ce véhicule permet de supprimer le problème du franchissement d'un obstacle pointu. Ce véhicule a toutefois pour inconvénient qu'il présente peu de possibilités de contrôle intrinsèque de posture, les deux chenilles frontales ne constituant qu'un auxiliaire de franchissement qui ne permet pas une modification sensible du centre de gravité de l'ensemble du véhicule. De plus, ce véhicule n'est pas réversible, c'est-à-dire qu'il est nécessaire de faire demi tour pour aborder un obstacle situé en arrière.

Le dernier véhicule à chenilles connu comprend six chenilles montées deux à deux sur trois corps chenillés articulés directement les uns sur les autres. Ce véhicule, appelé "Marauder" par la Sté britannique Morfax, correspond au véhicule précédent dans lequel un train supplémentaire de chenilles a été ajouté en arrière afin de rendre le véhicule symétrique. On supprime ainsi l'inconvénient de non réversibilité du véhicule précédent. Toutefois, les possibilités de contrôle intrinsèque de la posture restent limitées et la présence de trois trains de chenilles rend ce véhicule relativement complexe.

La présente invention a précisément pour objet un véhicule à chenilles articulées de conception particulièrement simple, mettant en oeuvre un minimum de motorisations et présentant l'essentiel des avantages des diverses solutions connues de véhicules à chenilles, sans en présenter les inconvénients. De plus, l'invention a pour objet un véhicule présentant une bonne stabilité quelle que soit sa posture, grâce au contrôle de la position de son centre de gravité et à la localisation de ses moyens de motorisation. A cet effet, il est proposé conformément à l'invention un véhicule à chenilles comprenant deux à quatre corps chenillés et au moins un corps non chenillé, chacun des corps chenillés comprenant au moins une chenille, le nombre total des chenilles du véhicule étant de trois ou de quatre, les corps chenillés et le corps non chenillé étant tous articulés autour d'un axe commun, ce véhicule étant caractérisé en ce qu'il comprend de plus des moyens pour maintenir en permanence la verticale passant par le centre de gravité du véhicule à l'intérieur du polygone de sustentation du véhicule, et des moyens de motorisation portés par les corps chenillés et placés à l'intérieur des enveloppes délimitées par les chenilles de ces corps chenillés. En plus de la simplicité de conception de ce véhicule, il apparaît clairement que celui-ci cumule les avantages des véhicules à chenilles existants sans en présenter les inconvénients. L'appartenance de ce véhicule à la catégorie des engins comprenant trois ou quatre chenilles articulées autour d'un axe commun permet ce véhicule de modifier sa configuration. Ainsi, les chenilles peuvent être toutes en appui lorsqu'on souhaite une bonne stabilité et une bonne adhérence, par exemple lors du franchissement d'une volée de marches ou encore la stabilité lors du fran chissement de la dernière marche et de l'arrivée sur le palier. Au contraire, certaines chenilles peuvent être repliées lorsqu'on désire réduire l'encombrement du véhicule pour permettre l'évolution sur les paliers.

En outre, la présence d'au moins un corps non chenillé externe permet de modifier la position du centre de gravité du véhicule sans interagir sur la configuration des corps chenillés. Ceci permet de positionner en permanence le centre de gravité dans une zone qui assure la stabilité du véhicule.

L'articulation du corps non chenillé externe porteur d'une charge autour d'un axe confondu avec l'axe d'articulation des corps chenillés entre eux permet éventuellement d'adopter une posture dans laquelle les chenilles sont légèrement relevées et le centre de gravité placé à la verticale de l'axe d'articulation. Cette position autorise un pivotement sur place du véhicule qui permet d'obtenir une grande manoeuvrabilité sur terrain plat analogue à celle des engins à roues.

Enfin, les dispositifs de motorisation d'avance des chenilles et de motorisation d'angulation des corps chenillés et du corps non chenillé autour de l'axe commun sont tous portés par les corps chenillés et situés à l'intérieur des enveloppes délimitées par les chenilles. Le corps non chenillé se trouve ainsi allégé et libéré de tout encombrement pour le transport de la charge utile principale. Cette charge utile ou tout autre équipement complémentaire de l'engin (batteries, contrôle, commande,...) peut être également répartie dans l'espace restant libre entre les modules chenillés de chacun des corps chenillés. En outre, les poids sont mieux répartis sur le véhicule et le centre de gravité à vide abaissé, ce qui est favorable à la stabilité.

Selon un mode de réalisation préféré de l'invention, les moyens pour maintenir la verticale passant par le centre de gravité à l'intérieur du polygone de sustentation sont des moyens d'asservissement agissant sur un moyen de motorisation d'angulation du corps non chenillé autour de l'axe commun pour asservir cette angulation à une consigne de position. De préférence, les moyens d'asservissement sont sensibles à des signaux délivrés par des capteurs de positionnement relatif entre les corps chenillés et non chenillés et par un capteur de verticale porté par l'un de ces corps.

Le véhicule selon l'invention, peut notamment comprendre deux corps chenillés comportant deux chenilles chacun, un premier des corps chenillés portant un dispositif de motorisation d'avance des chenilles placées d'un même côté du véhicule et un dispositif de motorisation d'angulation des corps chenillés entre eux, le deuxième corps chenillé portant un dispositif de motorisation d'avance des chenilles placées de l'autre côté du véhicule et un dispositif de motorisation d'angulation du corps non chenillé par rapport au deuxième corps chenillé.

Cette configuration particulièrement simple permet de limiter à quatre le nombre de dispositifs de motorisation, tout en permettant d'atteindre le but initialement fixé qui était principalement le franchissement des escaliers à plusieurs volées de marche, des obstacles mineurs, et des portes.

On decrira maintenant, à titre d'exemple non limitatif, un mode de réalisation préféré de l'invention en se référant aux dessins annexés dans lesquels:

- la figure 1 est une vue de dessus d'un mode de réalisation préféré du véhicule selon l'invention,
- la figure 2 est une vue de côté du véhicule représenté sur la figure 1,
- la figure 3 est une vue de dessus à plus grande échelle illustrant en particulier l'implantation des dispositifs de motorisation sur le véhicule,

- les figures 4a à 4d illustrent de façon schématique différentes séquences de montée du véhicule des figures 1 à 3 sur un échelon, et

- la figure 5 illustre de façon schématique une posture particulière du véhicule des figures 1 à 3 facilitant un pivotement sur place de celui-ci.

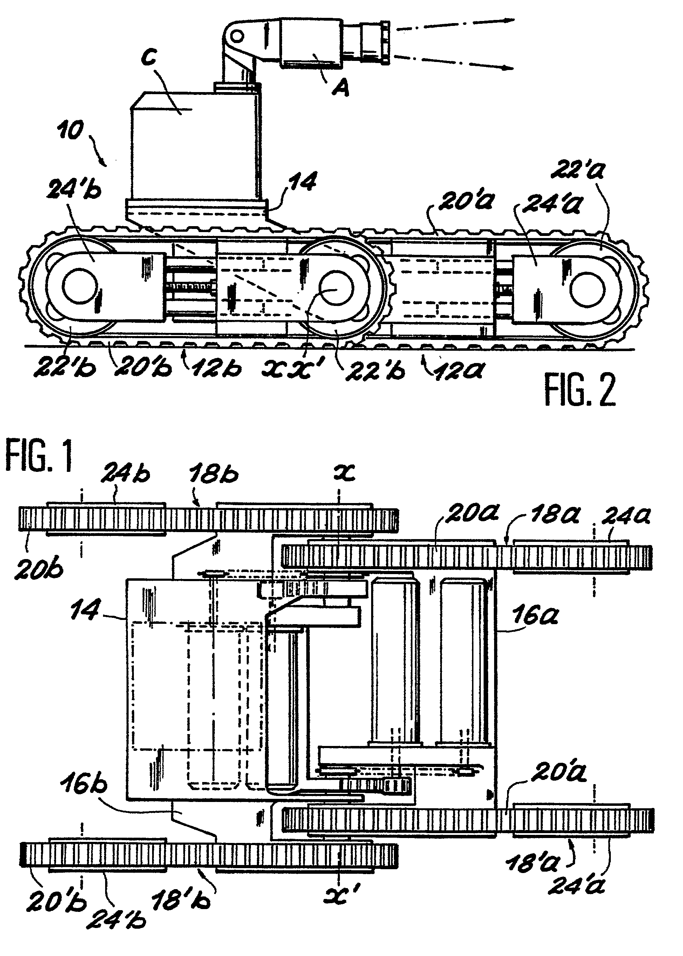

Dans le mode de réalisation préféré représenté sur les figures 1 à 3, le véhicule 10 selon l'invention comprend deux corps chenillés 12a et 12b, que l'on appellera respectivement corps chenillé avant et corps chenillé arrière, bien que le véhicule soit réversible et puisse donc se déplacer dans l'autre sens. Le véhicule comprend de plus un corps non chenillé 14.

Conformément une caractéristique essentielle de l'invention, les corps chenillés 12a et 12b ainsi que le corps non chenillé 14 sont articulés entre eux autour d'un axe unique commun XX'. Lorsque le véhicule est sur un terrain horizontal, cet axe XX' est également horizontal et il est disposé transversalement par rapport à l'axe longitudinal du véhicule.

Chacun des corps chenillés 12a et 12b comprend une entretoise 16a et 16b respectivement reliant deux modules chenillés désignés par les références 18a et 18'a pour le corps chenillé 12a et par les références 18b et 18'b pour le corps chenillé 12b. Lorsque le véhicule se déplace dans un sens tel que les corps chenillés 12a et 12b constituent respectivement l'avant et l'arrière du véhicule, les modules chenillés 18a et 18b sont placés à gauche du véhicule et les modules chenillés 18'a et 18'b à droite du véhicule.

Chacun des modules chenillés 18a, 18'a, 18b et 18'b est réalisé de façon identique. Pour cette raison, seul le module 18a va maintenant être décrit, les parties correspondantes des autres modules étant désignées sur les figures par les mêmes références affectées de l'indice du module qui leur correspond.

Le module chenillé 18a comprend une chenille 20a montée sur deux roues 22a (non visibles sur les figures) assurant de façon connue le maintien latéral de la chenille. L'une des roues de chacun des modules chenillés est centrée sur l'axe XX' du véhicule et supportée directement par une extension latérale de l'entretoise correspondante. Comme on le verra ultérieurement, c'est cette roue qui assure l'entraînement de la chenille correspondante. Les axes des autres roues de chacun des modules chenillés sont supportés par une structure rigide 24a montée de façon réglable sur l'entretoise 16a, afin d'assurer la tension de la chenille correspondante.

Chacun des modules chenillés comporte de plus une structure (non représentée) placée entre les roues et servant d'appui à la partie inférieure de la chenille qui est en contact avec le sol.

Compte tenu de l'articulation des deux corps chenillés 12a et 12b autour de l'axe commun XX', l'empattement de l'un de ces corps (12a sur la figure 1) est inférieur à celui de l'autre.

Dans le mode de réalisation préféré de l'invention représenté sur les figures, les dispositifs de motorisation des chenilles ainsi que ceux qui servent à articuler les corps chenillés 12a et 12b l'un par rapport à l'autre et le corps non chenillé 14 autour de l'axe XX' sont supportés par les corps chenillés et placés à l'intérieur de l'enveloppe délimitée par les modules chenillés du corps chenillé correspondant. De plus, l'articulation des corps chenillés 12a et 12b autour de l'axe XX' permet d'entraîner les deux chenilles placées d'un même côté du véhicule à l'aide d'un seul dispositif de motorisation assurant la fois la propulsion et les changements de direction du véhicule.

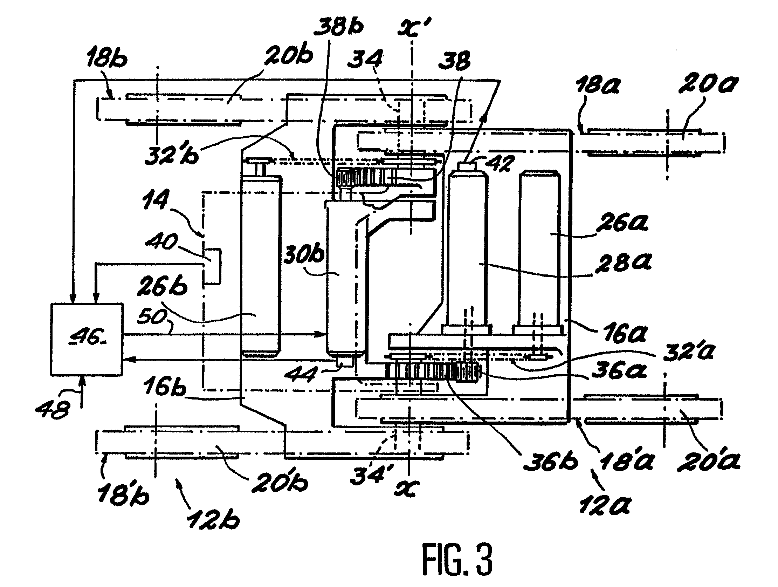

De façon plus précise et comme l'illustre notamment la figure 3, le corps chenillé 12a supporte par son entretoise 16a un premier moteur de propulsion 26a servant par exemple à entraîner simultanément les chenilles 20'a et 20'b situées du côté droit du véhicule et un moteur 28a servant par exemple à commander l'articulation des corps chenillés 12a et 12b entre eux. De façon comparable, l'entretoise 16b du corps chenillé 12b supporte un deuxième moteur de propulsion 26b assurant dans ce cas l'entraînement des chenilles 18a et 18b situées du côté gauche du véhicule et un moteur 30b de contrôle d'attitude commandant le pivotement du corps non chenillé 14 autour de l'axe XX'.

L'arbre de sortie du moteur 26a est relié par un mécanisme de transmission 32'a d'un quelconque type connu, tel qu'un système à chaîne et roues dentées, à un arbre 34' centré sur l'axe XX' et sur lequel sont solidarisées en rotation les roues des modules chenillés droits 18'a et 18'b également centrés sur cet axe XX'. Ainsi, la mise en oeuvre du moteur 26a a pour effet d'entraîner simultanément les chenilles 20'a et 20'b.

L'entraînement des chenilles 20a et 20b par le moteur 26b s'effectue de façon totalement identique par l'intermédiaire du mécanisme de transmission 32b qui entraîne en rotation l'axe 34 portant les roues des modules 18a et 18b centrés sur l'axe XX'.

Le moteur 28a d'articulation des corps chenillés entre eux porte sur son arbre de sortie un pignon 36a qui vient s'engréner sur un secteur denté 36b formé sur une chape prolongeant l'entretoise 16b du corps chenillé 12b. Grâce à cette configuration, il est clair que la mise en oeuvre du moteur 28a a pour effet de faire pivoter les corps chenillés 12a et 12b l'un par rapport à l'autre autour de leur axe d'articulation XX'.

Enfin, l'arbre de sortie du moteur 30b porte également un pignon 38b qui vient s'engrener sur une couronne dentée 38 formée sur une chape par laquelle le corps non chenillé 14 est supporté de façon pivotante sur l'axe 34. Comme le secteur denté 36b, le secteur denté 38 est centré sur l'axe d'articulation XX' du véhicule. Par conséquent, la mise en oeuvre du moteur 30b a pour effet de faire pivoter le corps non chenillé 14 par rapport aux corps non chenillés autour de l'axe XX'.

Dans le mode de réalisation représenté sur les figures 1 à 3, le corps non chenillé 14 se présente sous la forme d'un simple plateau sur lequel peut être posée une charge C (figure 2) adaptée à l'application envisagée. Sur la figure 2, on a également représenté le cas où le corps non chenillé 14 supporte une caméra orientable A.

On comprendra que la forme du corps non chenillé 14 pourra être modifiée et adaptée en fonction des applications particulières envisagées.

Afin d'assurer dans tous les cas la stabilité du véhicule, le moteur 30b commandant l'inclinaison du corps non chenillé 14 autour de l'axe XX' est asservi de façon à maintenir en permanence le centre de gravité du véhicule au-dessus du polygone de sustentation délimité par les chenilles 20a, 20b, 20'a, 20'b.

Pour commander cet asservissement, on équipe le véhicule d'un capteur de verticale 40 (inclinomètre ou gyroscope de verticale) et de capteurs de position 42, 44 des différents corps du véhicule les uns par rapport aux autres.

Le circuit d'asservissement 46 compare la position réelle du corps non chenillé par rapport à la verticale, cette position étant déterminée par les capteurs 40 à 44, à une consigne de position 48 de ce corps par rapport à la verticale. Un signal 50 représentatif de la différence entre la valeur réelle et la consigne est appliqué au moteur 30b, pour annuler cette différence (figure 3).

La consigne de position 48 peut être donnée directement par l'opérateur. Elle peut aussi être déterminée par un ordinateur situé par exemple à un poste fixe de commande. Dans ce dernier cas, le caractère plus élaboré de la commande permet le franchissement automatique d'obstacles.

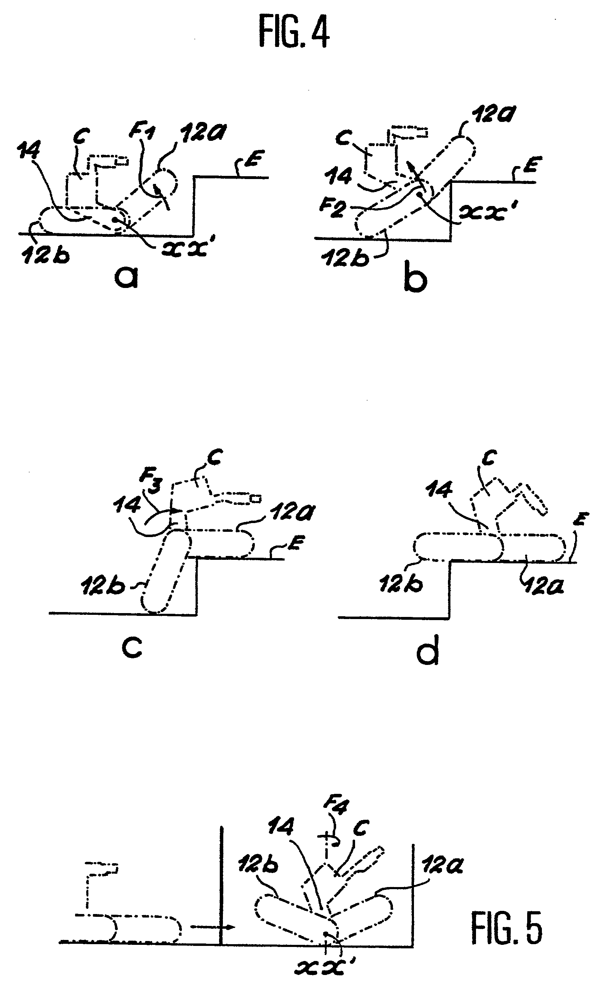

Afin d'illustrer par un exemple les possibilités du véhicule selon l'invention résultant notamment du découplage entre les fonctions de contrôle de l'attitude et de variation de la configuration du véhicule, on a représenté sur les figures 4a à 4d différentes séquences de montée sur un échelon à l'aide du véhicule décrit précédemment.

Sur la figure 4a, on voit qu'à l'approche de l'echelon E, le corps chenillé avant 12a peut être relevé (flèche $F_1$), le corps non chenillé 14 supportant la charge C étant pivoté vers l'arrière par rapport à l'axe XX'.

La partie avant du corps chenillé 12a étant placée en appui sur l'échelon E, on voit sur la figure 4b qu'un pivotement en sens inverse entre les deux corps chenillés (flèche $F_2$) tendant à ramener ceux-ci dans l'alignement l'un de l'autre, ainsi qu'un commencement de basculement du corps non chenillé 14 portant la charge vers l'avant permet d'atteindre une position d'attente.

La poursuite des deux mêmes mouvements et en particulier le basculement vers l'avant du corps non chenillé 14 illustré par la flèche $F_3$ sur la figure 4c, amène la face inférieure du corps chenillé avant 12a au-dessus de l'échelon E.

Comme l'illustre la figure 4d, l'actionnement des chenilles à l'aide des moteurs 26a et 26b ainsi que la remise en alignement des deux corps chenillés 12a et 12b permet au véhicule de poursuivre sa progression sur l'échelon E.

Une autre possibilité de posture particulièrement intéressante permise par le véhicule à chenilles selon l'invention est illustrée par la figure 5. On voit sur cette figure que le corps non chenillé 14 est placé dans une position telle que le centre de gravité de la charge C se trouve placé verticalement au-dessus de l'axe d'articulation XX' du véhicule. Les corps chenillés 12a et 12b étant légèrement relevés, on se trouve alors dans une position parfaitement symétrique dans laquelle seules les parties des chenilles situées à proximité de l'axe d'articulation XX' sont en contact avec le sol. Les frottements sont ainsi considérablement diminués et un demi tour sur place du véhicule est facilité (flèche $F_4$). Bien entendu, lorsque le véhicule n'est pas autonome, la liaison entre ce véhicule et le poste de commande fixe peut être réalisée soit par une liaison filaire (avec un touret embarqué sur le véhicule), soit par une liaison sans fil (type radiofréquence par exemple).

Dans le cas où le véhicule est télécommandé, il est équipé de systèmes télévisuels constitués d'une ou plusieurs caméras de télévision implantées sur des tourelles. Il est également équipé d'autres capteurs exteroceptifs (télémétrie laser, proximétrie, son, etc.).

Le véhicule dont un mode de réalisation préféré vient d'être décrit peut subir différentes modifications sans sortir du cadre de l'invention. Ainsi, le véhicule pourrait ne comprendre que trois chenilles et chacune des chenilles ou au moins certaines d'entre elles pourraient disposer de moyens d'articulation autonomes autour de l'axe commun XX'. Une telle configuration, qui présente l'avantage d'accroître le nombre de postures pouvant être adoptées par le véhicule, a cependant pour inconvénient d'augmenter le nombre de moteurs et, par conséquent, la complexité du véhicule. Enfin, le véhicule peut dans certains cas comprendre plusieurs corps non chenillés.

## Revendications

1. Véhicule à chenilles comprenant deux quatre corps chenillés (12a, 12b) et au moins un corps non chenillé (14), chacun des corps chenillés comprenant au moins une chenille (20a, 20b, 20'a, 20'b), le nombre total des chenilles du véhicule étant de trois ou de quatre, les corps chenillés (12a, 12b) et le corps non chenillé (14) étant tous articulés autour d'un axe commun (XX'), ce véhicule étant caractérisé en ce qu'il comprend de plus des moyens (46) pour maintenir en permanence la verticale passant par le centre de gravité du véhicule à l'intérieur du polygone de sustentation du véhicule, et des moyens de motorisation (26a, 26b, 28a, 30b) portés par les corps chenillés et placés à l'intérieur des enveloppes délimitées par les chenilles de ces corps chenillés.

2. Véhicule selon la revendication 1, caractérisé en ce que les moyens pour maintenir la verticale passant par le centre de gravité à l'intérieur du polygone de sustentation sont des moyens d'asservissement (46) agissant sur un moyen de motorisation (30b) d'angulation du corps non chenillé (14) autour de l'axe commun (XX'), pour asservir cette angulation à une consigne de position.

3. Véhicule selon la revendication 2, caractérisé en ce que les moyens d'asservissement (46) sont sensibles à des signaux délivrés par des capteurs (42, 44) de positionnement relatif entre les corps chenillés et non chenillés (12a, 12b, 14) et par un capteur de verticale (40) porté par l'un de ces corps.

4. Véhicule à chenilles selon l'une quelconque des revendications 1 à 3, caractérisé en ce qu'il comprend deux corps chenillés (12a, 12b) comportant deux chenilles (20a et 20'a, 20b et 20'b) chacun, un premier (12a) des corps chenillés portant un dispositif (26a) de motorisation d'avance des chenilles (20'a, 20'b) placées d'un même côté du véhicule et un dispositif (28a) de motorisation d'angulation des corps chenillés entre eux, le deuxième corps chenillé (12b) portant un dispositif (26b) de motorisation d'avance des chenilles (20a, 20b) placées de l'autre côté du véhicule et un dispositif (30b) de motorisation d'angulation du corps non chenillé (14) par rapport au deuxième corps chenillé.

## Patentansprüche

1. Kettenfahrzeug mit zwei bis vier Kettenkörpern (12a, 12b) und wenigstens einem Körper ohne Kettenantrieb (14), wobei jeder der Kettenkörper wenigstens eine Kette (20a, 20b, 20'a, 20'b) aufweist, wobei die Gesamtzahl der Ketten des Fahrzeugs drei oder vier beträgt, wobei die Kettenkörper (12a, 12b) und der Körper ohne Kettenantrieb (14) alle um eine gemeinsame Achse (XX') angelenkt sind, wobei das Fahrzeug dadurch gekennzeichnet ist, daß es weiterhin Einrichtungen (46) zum stetigen Aufrechterhalten der Vertikalen aufweist, die durch den Schwerpunkt des Fahrzeugs im Inneren des Auftriebpolygons des Fahrzeugs verläuft, und Motoreinrichtungen (26a, 26b, 28a, 30b) aufweist, die von den Kettenkörpern getragen und im Inneren von Umhüllungen angeordnet sind, die durch die Ketten dieser Kettenkörper begrenzt sind.

2. Fahrzeug nach Anspruch 1, dadurch gekennzeichnet, daß die Einrichtungen zum Aufrechterhalten der den Schwerpunkt im Inneren des Auftriebpolygons durchquerenden Vertikale Einstelleinrichtungen (46) sind, die auf eine Motoreinrichtung (30b) der Winkelbewegung bzw. Winkelstellung des Körpers ohne Kettenantrieb (14) um die gemeinsame Achse (XX') wirken, um diese Winkelstellung auf eine festgehaltene Stellung einzustellen.

3. Fahrzeuge nach Anspruch 2, dadurch gekennzeichnet, daß die Einstelleinrichtungen (46) empfindlich sind bezüglich Signalen, die durch Fühler (42, 44) der relativen Stellungen der Kettenkörper zu dem Körper ohne Kettenantrieb (12a, 12b, 14) und durch einen Aufnehmer der Vertikalen (40) geliefert werden, der von einem dieser Körper getragen wird.

4. Kettenfahrzeug nach einem der Ansprüche 1 bis 3, dadurch gekennzeichnet, daß es zwei Kettenkörper (12a, 12b) mit zwei Ketten (20a, 20'a, 20b, 20'b) jeweils aufweist, wobei ein erster (12a) der Kettenkörper eine Motorvorrichtung (26a) für den Vortrieb der Ketten (20'a, 20'b) aufweist, die auf derselben Fahrzeugseite angeordnet sind und eine Motorvorrichtung (28a) für die Winkelbewegung der Kettenkörper untereinander aufweist, wobei der zweite Kettenkörper (12b) eine Motorvorrichtung (26b) für den Vortrieb der Ketten (20a, 20b) aufweist, die auf der anderen Seite des Fahrzeugs angeordnet sind und eine Motorvorrichtung (30b) für die Winkelbewegung des Körpers ohne Kettenantrieb (14) bezüglich des zweiten Kettenkörpers aufweist.

## Claims

1. Caterpillar vehicle comprising two to four caterpillared bodies (12a, 12b) and at least one non-caterpillared body (14), each of the caterpillared bodies having at least one caterpillar (20a, 20b, 20'a, 20'b), the total number of caterpillars of the vehicle being three or four, the caterpillared bodies (12a, 12b) and the non-caterpillared body (14) all being articulated about a common axis (XX'), characterized in that the vehicle also comprises means (46) for permanently maintaining the vertical passing through the centre of gravity of the vehicle within the support polygon thereof and motorization means (26a, 26b, 28a, 30b) carried by the caterpillared bodies and placed within envelopes defined by the caterpillars of said caterpillared bodies.

2. Vehicle according to claim 1, characterized in that the means for maintaining the vertical passing through the centre of gravity within the support are control means (46) acting on an angulation motorization means (30b) for the non-caterpillared body (14) about the common axis (XX'), in order to make said angulation dependent on a position reference.

3. Vehicle according to claim 2, characterized in that the control means (46) are sensitive to signals supplied by sensors (42, 44) for the relative positioning between caterpillared and non-caterpillared bodies (12a, 12b, 14) and by a vertical position sensor (40) carried by one of these bodies.

4. Caterpillar vehicle according to any one of the claims 1 to 3, characterized in that it comprises two caterpillared bodies (12a, 12b), each having two caterpillars (20a and 20'a, 20b and 20'b), a first (12a) of said caterpillared bodies carrying a motorization means (26a) for advancing the caterpillars (20'a, 20'b) placed on the same side of the vehicle and a motorization means (28a) for the reciprocal angulation of the caterpillared bodies, the second caterpillared body (12b) carrying a motorization means (26b) for the advance of the caterpillars (20a, 20b) placed on the other side of the vehicle and a motorization means (30b) for the angulation of the non-caterpillared body (14) with respect to the second caterpillared body.

**FIG. 2**

**FIG. 1**

FIG. 3

# FIG. 4

a

b

c

d

# FIG. 5